(19) Europäisches Patentamt
European Patent Office
Office européen des brevets

(11) Veröffentlichungsnummer: **0 249 019**
**B1**

(12) # EUROPÄISCHE PATENTSCHRIFT

(45) Veröffentlichungstag der Patentschrift: **06.06.90**

(51) Int. Cl.$^5$: **G 02 B 5/30**

(21) Anmeldenummer: **87106122.2**

(22) Anmeldetag: **28.04.87**

(54) **Polarisatoren auf Polyacetylenbasis und ihre Herstellung.**

(30) Priorität: **10.05.86 DE 3615765**

(43) Veröffentlichungstag der Anmeldung:
**16.12.87 Patentblatt 87/51**

(45) Bekanntmachung des Hinweises auf die Patenterteilung:
**06.06.90 Patentblatt 90/23**

(84) Benannte Vertragsstaaten:
**CH DE FR GB IT LI NL**

(56) Entgegenhaltungen:
**DE-A-1 772 005**
**DE-A-3 148 787**
**GB-A- 807 244**

**PATENT ABSTRACTS OF JAPAN, Band 10, Nr. 131 (C-346)2188r, 15. Mai 1986; & JP - A - 60 255 806 (HITACHI SEISAKUSHO K.K.) 17.12.1985 (Kat. a)**

**Die Akte enthält technische Angaben, die nach dem Eingang der Anmeldung eingereicht wurden und die nicht in dieser Patentschrift enthalten sind.**

(73) Patentinhaber: **BAYER AG**
**D-5090 Leverkusen 1 Bayerwerk (DE)**

(72) Erfinder: **Ostoja Starzewski, Karl-Heinz, Dr.**
**Jeschkenweg 10**
**D-6368 Bad Vilbel (DE)**
Erfinder: **Witte, Josef, Dr.**
**Haferkamp 10**
**D-5000 Köln 80 (DE)**
Erfinder: **Claussen, Uwe, Dr.**
**Carl-Rumpff-Strasse 29**
**D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 249 019 B1

**Beschreibung**

Die Erfindung betrifft Polarisatoren auf der Basis einer Polymermatrix und Polyacetylen sowie ihre Herstellung durch Polymerisation von Acetylen in Lösungen der Polymermatrix und Verarbeitung der resultierenden Polyacetylen-Polymer-Lösungen zu Polarisatoren, insbesondere zu Polarisationsfolien.

Die Herstellung von Polarisationsfolien auf Basis von Polyvinylalkohol und Jod ist zB. aus DD Patent 141 076 (Anmelde-Nr. 210 342) und der darin zitierten weiteren Literatur bekannt. Dabei wird eine Polyvinylalkoholfolie nachträglich eingefärbt. Um einigermaßen befreidigende Ergebnisse zu erhalten, bedarf es komplizierter Herstellungs- und Nachbehandlungsverfahren. Dennoch ist in der Regel nur ein Teil der Folie brauchbar. Schließlich ist die Polarisationsfolienherstellung in der Praxis auf wenige wirksame Substanzen begrenzt, was deren Anwendbarkeit einschränkt.

In DE—OS 17 72 005 wird eine lichtpolarisierende Folie mit orientierten anisotropen polymeren Kristallen beschrieben.

Diese Kristalle zeigen keine Absorption im Bereich des sichtbaren Lichts; die Polarisierung kommt durch Lichtbrechung zustande.

In JP—A—60 255 806 (zitiert nach Pat. Abstr. Japan, Vol. 10 (1986), 131 (C-346) [2188]) werden einachsig orientierte Acetylenpolymere mit elektrischer und optischer Anisotropie beschrieben, zu deren Herstellung in die geordnete Phase von Flüssigkristallen Ziegler-Katalysatoren eingebracht werden, woraufhin an der Oberfläche eines solchen Systems Acetylen polymerisiert wird. Polarisierende Eigenschaften des entstandenen Materials werden nicht erwähnt.

Es wurden nun Polarisation auf der Basis einer Polymermatrix gefunden, dadurch gekennzeichnet, daß als lichtpolarisierende Substanz Polyacetylen enthalten ist.

Gegenstand der Erfindung ist weiterhin ein Verfahren zur Herstellung von Polarisatoren auf der Basis einer Polymermatrix, in der Polyacetylen als lichtpolarisierende Substanz enthalten ist, dadurch gekennzeichnet, daß man in einer Lösung des Matrixpolymeren vorzugsweise mit Hilfe eines geeigneten Katalysators Acetylen polymerisiert, die Polyacetylen enthaltende Polymerlösung zu Formkörpern verarbeitet und durch Erzeugung einer Vorzugsrichtung den Polarisator herstellt.

Man kann die Vorzugsrichtung durch Recken bzw. Verstrecken des Formkörpers erzeugen, vorzugsweise nach Erhalt des Formkörpers.

Weiterer Gegenstand der Erfindung ist die Verwendung solcher Formkörper zur Erzeugung von polarisiertem Licht, wobei z.B. die Folie gegebenenfalls mit weiteren Folien oder Glasschichten je nach Einsatzbereich abgedeckt sein kann.

Die Polarisatoren weisen eine hohe optische Güte und Transparenz auf.

Die Polymermatrix kann aus polaren oder unpolaren Monomereinheiten, gegebenenfalls Mischungen davon, aufgebaut sein.

Das Polyacetylen ist vorzugsweise homogen in der Matrix verteilt.

In einer bevorzugtgen Ausführungsform ist weniger als 50 Gewichtsprozent, bezogen auf den Polarisator, an Polyacetylen enthalten.

Für die Polymermatrix geeignete Polymere sind z.B. Polyvinylalkohol, Polyacrylnitril und Polyvinylchlorid sowie Copolymere, die solche Monomereinheiten enthalten, wie z.B. teilverseifte Polyvinylacetate oder selektiv hydrierte Butadien-Acrylnitril-Copolymere.

Als Katalysatoren eignen sich alle Katalysatoren für die Herstellung von Polyacetylen, sofern sie nicht durch die Polymerlösung inaktiviert werden, insbesondere Nickelverbindungen, vorzugsweise solche herstellbar durch Umsetzung einer Nickel-(O)-Verbindung oder einer Verbindung, die in situ in eine Nickel-(O)-Verbindung überführt werden kann, mit Verbindungen der Formeln (I) und gegebenenfalls (II)

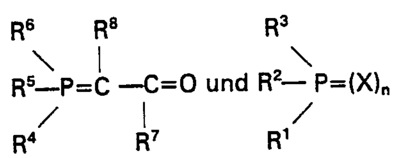

und

(I) (II)

worin

$R^1$, $R^2$ und $R^3$ unabhängig voneinander gegebenenfalls durch Halogen, Hydroxy, $C_1$—$C_{20}$-Alkoxy, $C_6$—$C_{12}$-Aryloxy oder Nitro substituiertes $C_1$—$C_{20}$-Alkyl, $C_6$—$C_{12}$-Aryl oder $C_3$—$C_8$-Cycloalkyl, ferner $C_6$—$C_{12}$-Aryl-$C_1$—$C_{20}$-alkyl, $C_1$—$C_{20}$-Alkyl-$C_6$—$C_{12}$-aryl, $C_1$—$C_{20}$-Alkyl-$C_3$—$C_8$-cyclo-alkyl, $C_6$—$C_{12}$-Aryl-$C_3$—$C_8$-cycloalkyl, $C_2$—$C_6$-Alkenyl, $C_6$—$C_{12}$-Aryl-$C_2$—$C_6$-alkenyl, Di-$C_1$—$C_4$-alkylamino und gegebenenfalls substuiertes Phenoxy oder Alkoxy,

X=O, $NR^9$ oder 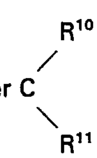

n=Null oder Eins,

$R^4$, $R^5$, $R^6$, $R^7$ und $R^8$ unabhängig voneinander, gegebenenfalls durch Halogen, Hydroxy, $C_1$—$C_{20}$-Alkoxy

oder $C_6$—$C_{12}$-Aryloxy substituiertes $C_1$—$C_{20}$-Alkyl, $C_6$—$C_{12}$-Aryl, $C_2$—$C_{30}$-Alkenyl oder $C_3$—$C_8$-Cycloalkyl, ferner $C_6$—$C_{12}$-aryl, Halogen, Hydroxy, $C_1$—$C_{20}$-Alkoxy oder $C_6$—$C_{12}$-Aryloxy, außerdem

$R^7$=Wasserstoff,

$R^8$=Wasserstoff, Acyl oder Sulfonat und

$R^9$, $R^{10}$ und $R^{11}$ unabhängig voneinander Wasserstoff, Silyl, Acyl, Nitrophenyl, Halogen, Cyano oder $R^1$ bedeuten, oder von Nickelverbindungen, herstellbar durch Umsetzung einer Nickel-(O)-Verbindung oder einer Verbindung, die in situ in eine Nickel-(O)-Verbindung überführt werden kann, mit einem Addukt oder einem Gemisch aus Maleinsäreanhydrid, einer Verbindung der Formel II mit n=0 und einer Verbindung der Formel II mit n=0 oder 1, worin $R^1$, $R^2$ und $R^3$ die vorstehend genannte Bedeutung besitzen oder Nickelverbindungen, herstellbar durch Umsetzung einer Nickel-(O)-Verbindung oder einer Verbindung, die in situ in eine Nickel-(O)-Verbindung überführt werden kann, mit einem Addukt oder einem Gemisch aus einer chinoiden Verbindung und einer Verbindung der Formel II mit n=0 und einer Verbindung der Formel II mit n=0 oder 1, worin $R^1$, $R^2$, $R^3$ die vorstehend genannte Bedeutung besitzen.

Als chinoide Verbindungen kommen o- oder p-chinoide Verbindungen der Benzol- und Naphthalinreihe sowie Anthrachinone in Frage, die noch substituiert sein können.

Beispielhaft seien p-Benzochinon, Chloranil, 1,4-Naphthochinon und 9,10-Anthrachinon genannt.

Bevorzugte Reste $R^1$, $R^2$ und $R^3$ sind $C_1$—$C_6$-Alkyl, Cyclohexyl, Phenyl, Tolyl, Benzyl, Di-$C_1$—$C_4$-alkylamino, Phenoxy und $C_1$—$C_4$-Alkoxy.

$R^4$ ist vorzugsweise $C_6$—$C_{12}$-Aryl.

$R^5$, $R^6$, $R^7$ und $R^8$ sind vorzugsweise Cyclohexyl, Phenyl, Tolyl, Benzyl, Vinyl und $C_1$—$C_4$-Alkyl.

$R^7$ ist darüberhinaus bevorzugt Wasserstoff oder $C_1$—$C_4$-Alkoxy, $R^8$ darüberhinaus bevorzugt Wasserstoff, Acetyl, Benzoyl oder Sulfonat.

$R^9$, $R^{10}$ und $R^{11}$ sind vorzugsweise Wasserstoff, $C_1$—$C_6$-Alkyl, Phenyl, Chlorphenyl, Nitrophenyl, $C_1$—$C_6$-Alkenyl und Phenyl-$C_2$—$C_6$-alkenyl.

Bevorzugt werden pro Mol Nickel-(O)-Verbindung 1—4 Mole der Verbindung der Formel (I) und 0—4 Mole der Verbindung der Formel (II) eingesetzt, besonders bevorzugt pro Mol der Nickel-(O)-Verbindung 1 Mol der Verbindung der Formel (I) und 1 Mol der Verbindung der Formel (II).

Die Umsetzungstemperatur beträgt 0—100°C, insbesondere 20—70°C.

Die Reaktion wird unter Ausschluß von Sauerstoff, vorzugsweise in einem Lösungsmittel das gegenüber den Reaktanden inert sein muß, wie Benzol, Toluol, Cyclohexan und n-Hexan, durchgeführt.

Nach Beendigung der Reaktion wird der Katalysator als Feststoff gewöhnlich durch Filtration isoliert, wobei man nach Bedarf die Lösung zuvor einengt und/oder abkühlt.

Er kann auch ohne Isolierung direkt zur POlymerisation von Acetylen eingesetzt werden.

Als Nickel-(O)-Verbindung seien beispielhaft $Ni(cyclooctadien)_2$ und $Ni(allyl)_2$ genannt.

Als Nickelverbindungen, die in situ in Nickel-(O)-Verbindungen überführt werden können seien beispielsweise aufgeführt: Ni-acetylacetonat, Ni-octanoat und Ni-stearat die mit Hilfe von üblichen Reduktionsmitteln wie Boranat, Alanat, Aluminiumalkylen oder Lithiumorganylen reduziert werden können.

Die Menge der verwendeten Nickel-Verbindung ist nicht kritisch. Typische Katalysatorkonzentrationen liegen zwischen 10 und $10^{-6}$, vorzugsewise zwischen $10^{-2}$ und $10^{-4}$ Mol pro Liter. Die Menge an Katalysator, bezogen auf Acetylen, liegt im Bereich von 0.1 bis 10 Gewichtsprozent, vorzugsweise 0,5 bis 5 Gewichtsprozent.

Die Polymerisation kann sowohl kontinuierlich als auch diskontinuierlich durchgeführt werden.

Die Polymerisationstemperatur beträgt bevorzugt 0° bis +140°C, insbesondere 60° bis 100°C, wobei bei tiefen Temperaturen eine Aktivierung des Katalysators durch aluminium-organische Verbindungen, beispielsweise durch Alkoxyaluminiumdialkyl oder Aluminiumtrialkyl zu empfehlen ist.

Die Polymerisation kann bei Normaldruck durchgeführt werden, jedoch ist auch das Polymerisieren unter Druck möglich. Das Acetylen kann ohne weitere Reinigung aus der Druckflasche entnommen und verwendet werden. Bei acetonempfindlichen Katalysatoren empfiehlt es sich, im Acetylen etwa enthaltenes Aceton zuvor in einer Kühlfalle auszufrieren.

Die erfindungsgemäßen polyacetylenhaltigen Polymerprodukte zeigen makroskopisch entweder eine heterogene oder eine homogene Polyacetylenverteilung in der Polymermatrix. Die heterogene Verteilung äußert sich durch diskrete schwarze Teilchen von Polyacetylen in der Polymermatrix, allerdings in hochdisperser Verteilung. Die bevorzugte homogene Verteilung äußert sich durch eine durchgehend gelbbraune, rötliche, violette bis schwarzblaue Färbung des klaren Polymerproduktes.

Besonders bevorzugte Polarisatoren sind Folien, sie können aber auch etwa in Form von Platten oder von Fasern vorliegen.

Die Polymerlösungen mit Polyacetylen können mittels an sich üblicher Methoden zu Folien verarbeitet werden. Verwiesen wird beispielsweise auf Ullmanns Enzyklopädie ter techn. Chemie, 4 Aufl., Verlag Chemie, Weinheim/Bergstraße.

Die erhaltenen Folien werden zum Erhalt der gewünschten Polarisationseigenschaften in an sich bekannter Weise gereckt. Der Grad der Verstreckung richtet sich nach den gewünschten Eigenschaften; in einer bevorzugten Ausführungsform werden die Folien in einem Verhältnis von 1:1,5 bis 1:15 gereckt.

Die Dicke der erhaltenen Folien richtet sich nach dem vorgesehenen Verwendungszweck. Im allgemeinen beträgt die Dicke der Folien 1 bis 100 µm.

Katalysatorherstellung

5 mmol Bis-cyclooctadien-nickel(O) in 100 ml trockenem stickstoffgesättigtem Toluol werden unter Stickstoff mit 5 mmol Benzoyl-methylen-triphenylphosphoran und 5 mmol Methylen-trimethylphosphoran gemischt. Unter intensivem Rühren erwärmt man ca. 1 Stunde auf 40 bis 60°C. Die dunkelgelb-braune Lösung wird filtriert und im Vakuum zur Trockne eingeengt. Der gelbe Katalysator wird in 25 ml trockenem stickstoffgesättigtem Dimethylformamid gelöst. Diese Lösung bzw. ein Teil derselben wird bei der nachfolgenden Acetylenpolymerisation eingesetzt.

Beispiel

In einem 250 ml Reaktionskolben (Gaseinleitung, Tropftrichter ohne Druckausgleich mit $N_2$-Zuführung, Rührer, Innenthermometer, Rückflußkühler mit Blasenzähler) wurden unter Inertgas 10 g Polyvinylalkohol in 90 g trockenem DMF (entgast, $N_2$-gesättigt) bei 100°C bis 120°C gelöst und dann auf 80°C temperiert. Anschließend wurden 0,5 mmol des vorstehend beschriebenen Katalysators in 2,5 ml DMF unter $N_2$-eingerührt und ein gleichmäßiger Strom von Acetylengas (Trockeneis/Aceton) wurde während 10 Minuten eingeleitet. Die Reaktionslösung wurde kurz auf 100°C erhitzt und anschließend durch ein Polyamid-Tuch von 200 µm Maschenweite filtriert.

Die klare rotbraune PVA—PAC Lösung wurde heiß auf einer PET-Folie mit einem Rakel in einer Schicht von 400 µm ausgestrichen. Nach Abdampfen des Lösungsmittels erhielt man eine klare, rotbraune, transparente Folie, die von der Unterlage abgezogen und bei ca. 90° im Verhältnis 1:4 gereckt wurde.

Die gereckte Folie wies eine gute lichtpolarisierende Wirkung von mehr als 90% auf.

**Patentansprüche**

1. Polarisatoren auf der Basis einer Polymermatrix, dadurch gekennzeichnet, daß als lichtpolarisierende Substanz Polyacetylen enthalten ist.

2. Polarisatoren nach Anspruch 1, dadurch gekennzeichnet, daß die Polymermatrix aus polaren Monomereinheiten aufgebaut ist.

3. Polarisation nach Anspruch 1, dadurch gekennzeichnet, daß die Polymermatrix aus unpolaren Monomereinheiten aufgebaut ist.

4. Polarisationen nach Anspruch 1, dadurch gekennzeichnet, daß das Polyacetylen in der Matrix homogen verteilt ist.

5. Polarisatoren nach Anspruch 1, dadurch gekennzeichnet, daß weniger als 50 Gew.-% Polyacetylen enthalten ist.

6. Polarisatoren nach Anspruch 1, dadurch gekennzeichnet, daß sie als Folien vorliegen.

7. Verfahren zur Herstellung von Polarisatoren auf der Basis einer Polymeratrix, in der Polyacetylen als lichtpolarisierende Substanz enthalten ist, dadurch gekennzeichnet, daß man in einer Lösung eines Matrixpolymeren Acetylen polymerisiert, die Polyacetylen enthaltende Polymerlösung zu Formkörpern verarbeitet und durch Erzeugung einer Vorzugsrichtung den Polarisator herstellt.

8. Verfahren nach Anspruch 7, dadurch gekennzeichnet, daß man einen Ylid-Nickel-Katalysator verwendet.

9. Verfahren nach Anspruch 7, dadurch gekennzeichnet, daß man die Vorzugsrichtung durch Recken bzw. Verstrecken des Formkörpers erzeugt.

10. Verwendung des Polarisators nach Anspruch 1 zur Herstellung von polarisiertem Licht.

**Revendications**

1. Polariseurs à base d'une matrice polymérique, caractérisés en ce qu'un polyacètylène est contenu comme substance polarisant la lumière.

2. Polariseurs suivant la revendication 1, caractérisés en ce que la matrice de polymère est constituée de motifs monomériques polaires.

3. Polariseurs suivant la revendication 1, caractérisés en ce que la matrice de polymère est constituée de motifs monomériques non polaires.

4. Polariseurs suivant la revendication 1, caractérisés en ce que le polyacétylène est réparti de façon homogène dans la matrice.

5. Polariseurs suivant la revendication 1, caractérisés en ce que la quantité contenue de polyacétylène est inférieure à 50% en poids.

6. Polariseurs suivant la revendication 1, caractérisés en ce qu'ils se présentent sous forme de feuilles.

7. Procédé de fabrication de polariseurs à base d'une matrice de polymère, dans laquelle un polyacétylène est contenu comme substance polarisant la lumière, caractérisé en ce qu'on polymérise de l'acétylène dans une solution d'un polymère formant la matrice, on transforme la solution polymérique contenant le polyacétylène en pièces moulées et on produit le polariseur en créant une orientation préférentielle.

8. Procédé suivant la revendiation 7, caractérisé en ce qu'on utilise un catalyseur au nickel de type ylide.

9. Procédé suivant la revendication 7, caractérisé en ce qu'on crée l'orientation préférentielle par étirage ou extension de la pièce moulée.

10. Utilisation du polariseur suivant la revendication 1 pour produire de la lumière polarisée.

**Claims**

1. Polarizers based on a polymer matrix, characterized in that polyacetylene is included as light-polarizing substance.

2. Polarizers according to Claim 1, characterized in that the polymer matrix is constructed from polar monomer units.

3. Polarizers according to Claim 1, characterized in that the polymer matrix is constructed from nonpolar monomer units.

4. Polarizers according to Claim 1, characterized in that the polyacetylene is distributed homogeneously in the matrix.

5. Polarizers according to Claim 1, characterized in that less than 50% by weight of polyacetylene is included.

6. Polarizers according to Claim 1, characterized in that they exist as films.

7. Process for the production of polarizers based on a polymer matrix in which polyacetylene is included as light-polarizing substance, characterized in that the polymerization is carried out in a solution of a matrix-polymeric acetylene, the polyacetylene-containing polymer solution is processed into moulded articles, and the polarizer is produced by generation of a privileged direction.

8. Process according to Claim 7, characterized in that an ylid-nickel catalyst is used.

9. Process according to Claim 7, characterized in that the privileged direction is generated by stretching or drawing the moulded article.

10. Use of the polarizer according to Claim 1 for generating polarized light.